# EUROPEAN PATENT SPECIFICATION

(11) **EP 2 873 504 B1**
(45) Date of publication and mention of the grant of the patent: **12.04.2017**
(21) Application number: 14191811.0
(22) Date of filing: 05.11.2014
(51) Int. Cl.: B29C 41/04, B29C 41/20, B60K 13/04, B65D 25/42, F01N 3/10, B60K 15/04, B29L 31/00, B29K 705/12, B60K 15/03

(54) **Method for manufacturing a fluid storage tank assembly for an off-road vehicle**
Verfahren zur Herstellung einer Flüssigkeitsaufbewahrungstankanordnung für ein Geländefahrzeug
Procédé pour la fabrication d'un ensemble de cuve de stockage de fluide pour un véhicule tout-terrain

(30) Priority: 15.11.2013 US 201314081719
(43) Date of publication of application: 20.05.2015
(73) Proprietor: CNH Industrial Italia S.p.A., 10135 Torino (IT)
(72) Inventor: Blomberg, David, Dent, MN Minnesota 56528 (US); Zurn, Daniel J., Horace, ND North Dakota 58047 (US); Wever, Jason E., Fargo, ND North Dakota 58103 (US)
(74) Representative: CNH Industrial IP Department

(56) References cited:
- EP-A1- 1 604 858
- EP-A2- 1 151 928
- US-A- 3 827 595
- US-A1- 2003 107 218
- US-A1- 2004 051 304
- US-A1- 2007 029 701
- US-B1- 6 415 941

## Description

### BACKGROUND

The present disclosure relates generally to off-road vehicles, and more particularly, to a fluid storage tank assembly for an off-road vehicle.

Certain off-road vehicles are powered by diesel engines which produce exhaust gas. The exhaust gas may include undesirable byproducts, such as nitrogen oxides (NOx), carbon monoxide, and particulate material. To reduce emissions of such byproducts, vehicle exhaust systems may spray diesel exhaust fluid (DEF) from a DEF tank (e.g., fluid storage tank) into the flow of exhaust gas. Because of the substantial size of some off-road vehicles (e.g., a tractor) that utilize DEF, a hose may be coupled to a first fill spout on the DEF tank to improve the ease with which the tank may be filled. More specifically, in some embodiments, the DEF tank may include a second fill spout located on a different side of the off-road vehicle from the fuel fill spout. Thus, the hose may be coupled to the first fill spout of the DEF tank to enable the DEF and fuel to be replenished from the same side of the off-road vehicle. For example, one end of the hose may be disposed about an outer diameter of the fill spout, a hose clamp may be disposed about an outer diameter to the hose to couple the hose to the fill spout, and the hose may be routed through the vehicle to the same side of the vehicle as the fuel fill spout. However, if the coupling between the hose and the DEF tank loosens, for example during cold temperatures, DEF may leak at the coupling point. US 6,415,941 B1 discloses a method of making a container assembly. A plastic fixture is disposed in the mould. The fixture has an opening and has at least one ridge on a surface that is to be embedded in the body of the container. EP 1 604 858 A1 discloses a method of production of a tank whereby a port device is injection moulded, then placed in a mould and the wall of the tank is then produced. US 3,827,595 discloses a beer keg having a tapper plug on a side wall and a filler plug on a top wall. The plugs are cast in position when the walls are formed.

EP 1 151 928 A2 discloses a method for embedding a connector in a roto-moulded plastic tank in which an insulating component is positioned between a holder and the connector, the inner end of the connector is closed by a cap and the tank is then formed by roto-moulding. BRIEF DESCRIPTION

An embodiment commensurate in scope with the claimed invention is summarized below. This embodiment is not intended to limit the scope of the claimed invention, but rather only to provide a brief summary of possible forms of the invention. Indeed, the invention may encompass a variety of forms that may be similar to or different from the embodiments set forth below.

The method for manufacturing a fluid storage tank assembly for an off-road vehicle according to the present invention includes disposing a support ring within a cavity of a rotational mold, in which the cavity is shaped to form a fill spout of the fluid storage tank assembly; r holding said support ring in place using a plug which extends through an opening in the outer shell of said mold to form a well-defined opening in said fill spout; and flowing a liquid polymeric material within the rotational mold such that the liquid polymeric material enters the cavity, directly contacts the support ring, and bonds to the support ring as the liquid polymeric material hardens.

In a comparative example, a fluid storage tank assembly for an off-road vehicle, includes a first fill spout comprising a support, wherein the first fill spout is formed from a polymeric material in a rotational molding process, the support ring is bonded to the polymeric material during the rotational molding process, and the first fill spout is configured to couple to a hose to enable the fluid storage tank assembly to be filled from a first side of the off-road vehicle.

In another comparative example, a fluid storage tank assembly for an off-road vehicle, is manufactured by a process that includes rotating a rotational mold filled with a liquid polymeric material such that the liquid polymeric material enters a cavity configured to form a fill spout and bonds to a support ring disposed within the cavity as the liquid polymeric material harden.

### DRAWINGS

These and other features, aspects, and advantages of the present invention will become better understood when the following detailed description is read with reference to the accompanying drawings in which like characters represent like parts throughout the drawings, wherein:
FIG. 1 is a perspective view of an embodiment of an off-road work vehicle including a DEF tank;
FIG. 2 is a block diagram of an exhaust system that may be employed within the off-road vehicle of FIG. 1, in accordance with an embodiment of the present disclosure;
FIG. 3 is a cross-sectional view of a fill spout of a DEF tank that may be employed within the work vehicle of FIG. 1, in accordance with an embodiment of the present disclosure;
FIG. 4 is a cross-sectional view of a rotational mold that may be used to form the DEF tank of FIG. 3, in accordance width the present invention
FIG. 5 is a cross-sectional view of a liquid polymeric material disposed within the rotational mold of FIG. 4 and a support ring in contact with the liquid polymeric material, in accordance with the present invention
FIG. 6 is a cross-sectional view of a resulting DEF tank formed by the rotational mold of FIG. 4, in accordance with an embodiment of the present disclosure; and
FIG. 7 is a flow chart of a process for forming a DEF tank assembly, in accordance with an embodiment of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

As discussed above, the use of diesel engines in off-road vehicles may generate undesirable byproducts (e.g., nitrogen oxides, carbon monoxide, and particulate material). Accordingly, the exhaust system of some off-road vehicles may spray diesel exhaust fluid (DEF), which is stored in a DEF tank, into the exhaust to reduce such byproducts. In some embodiments, to provide sufficient DEF for large off-road vehicles, a DEF tank may store between 150-250 liters of DEF. One example of a large off-road vehicle is a Steiger Tractor, made by CNH Global N.V. of Amsterdam, Netherlands. A Steiger Tractor may have an axle width of approximately 90 inches and a wheelbase of approximately 154 inches.

To facilitate filling the DEF tank of such a substantial off-road vehicle, a hose may be coupled to a fill spout of the DEF tank to enable the DEF tank to be filled from a more convenient location. For example, in some embodiments, the hose may enable the DEF tank to be filled from the same side of the vehicle as the fuel tank. However, external factors, such as changes in temperature, may cause the coupling between the hose and the fill spout to loosen, which may enable DEF to leak through the coupling. For example, a DEF tank formed out of a polymeric material, such as thermoplastic, may shrink relative to the hose in cold weather, thereby loosening the coupling.

Additionally, the polymeric material used to form the DEF tank may be relatively pliable. Thus, the hose may be forced into the inner diameter of the fill spout to provide structural support for the fill spout. In some embodiments, the hose may be coupled to the fill spout by mechanically cleaning out the fill spout and forcing the hose or a support insert into the inner diameter of the fill spout. More specifically, the opening of the fill spout may be partially or completely obstructed by the polymeric material (e.g., thermoplastic) used to mold the DEF tank. Thus, the fill spout may be unobstructed by mechanically cleaning (e.g., drilling) the opening. However, when the fill spout is mechanically cleaned out, debris and/or residue is produced, which may be left within the DEF tank.

Accordingly, the present invention provides a method for manufacturing a DEF tank assembly that substantially reduces or eliminates the possibility of DEF fluid leakage and/or substantially reduces or eliminates the possibility of debris collection within the DEF tank. More specifically, the method includes disposing a support ring within a cavity of a rotational mold such that the cavity is shaped to form a fill spout of the fluid storage tank assembly and flowing a liquid polymeric material within the rotational mold such that the liquid polymeric material enters the cavity, directly contacts the support ring, and bonds to the support ring as the liquid polymeric material hardens. The method may further include attaching a hose around an outer diameter of the fill spout to enable the fluid storage tank assembly to be filled with a fluid. Accordingly, the support ring, which is bonded to the fill spout of the DEF tank, provides structural support for the fill spout, thereby substantially reducing or eliminating the possibility of DEF leakage. For example, the support ring may reduce the amount of shrinkage of the fill spout during cold temperatures, thereby maintaining the dimensions of the fill spout. Additionally, the support ring is bonded to the polymeric material of the fill spout during the molding process to provide a well-defined (e.g., unobstructed) opening into the DEF tank. As a result, the process of removing material from the inner surface of the fill spout is obviated. Thus, as will be described in more detail below, the techniques described herein may improve the reliability of a DEF tank. Although the present techniques are generally described in relation to a DEF tank, the techniques described herein may additionally be utilized in other storage tanks, such as fuel tanks, grain tanks, fertilizer tanks, and the like.

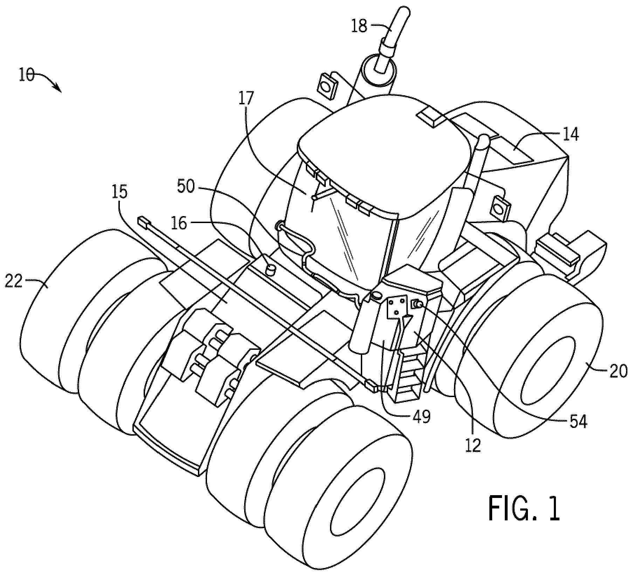

With the forgoing in mind, it may be useful to describe a DEF tank assembly incorporating the techniques disclosed herein. Accordingly, FIG. 1 is a perspective view of an embodiment of an off-road vehicle 10 that employs a DEF tank assembly 12. The illustrated off-road vehicle 10 is an agricultural work vehicle. However, in alternate embodiments, the off-road vehicle may be any suitable vehicle that utilizes DEF. As depicted, the vehicle 10 also includes a body 14 that houses an engine, transmission, cooling system, and power train (not separately shown), a diesel fuel tank 15 that may be filled via a fuel fill spout 16, a cabin 17 where an operator may sit or stand to operate the vehicle 10, an exhaust pipe 18, and four front wheels 20 and four rear wheels 22 that rotate to facilitate movement of the vehicle 10. Alternatively, the vehicle 10 may have two or six front wheels 20 and/or rear wheels 22. In addition, the vehicle 10 may have two tracks or four tracks instead of wheels.

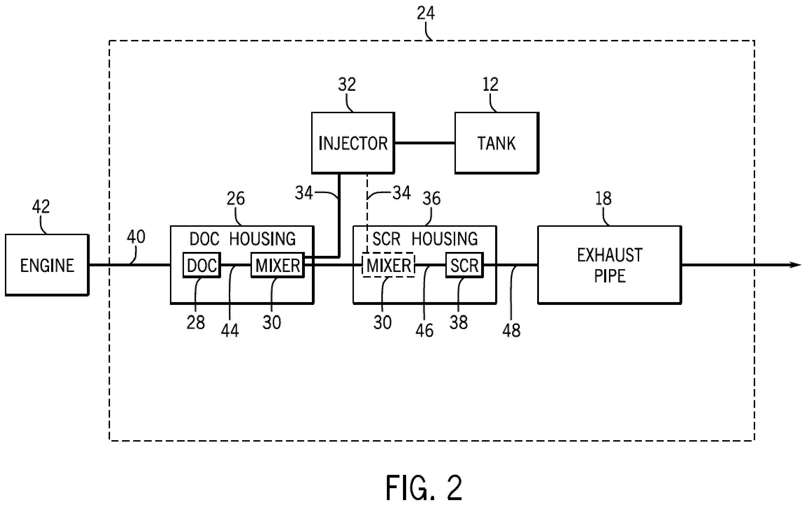

As described above, the vehicle's exhaust system may spray DEF from the DEF tank 12 into an exhaust flow to reduce undesirable byproducts. More specifically, as shown in FIG. 2, the exhaust system 24 includes a diesel oxidation catalyst (DOC) assembly having a housing 26 containing a DOC 28 and a mixer 30. The exhaust system 24 also includes an injector 32 for injecting DEF 34, the DEF tank 12, a selective catalytic reduction (SCR) housing 36 containing an SCR module 38, and the exhaust pipe 18. In some embodiments, the mixer 30 may be disposed within the SCR housing 36 instead of, or in addition to, the DOC housing 26. Certain embodiments of the exhaust system 24 may additionally include a diesel particulate filter to capture particulate matter, a muffler, or any other element suitable for use in an exhaust system.

More specifically, the DOC housing 26 receives exhaust 40 expelled by the engine 42 and directs the exhaust 40 into the DOC 28. The DOC 28 receives the exhaust and catalyzes the oxidization of carbon monoxide to carbon dioxide by using excess oxygen in the exhaust 40. In addition, the DOC 28 uses excess oxygen to catalyze the conversion of hydrocarbons to water and carbon dioxide. In certain embodiments, the DOC 28 may use ceramics and/or metals (e.g., platinum or palladium) to catalyze the oxidization of the hydrocarbons and carbon monoxide molecules. Thus, the DOC 28 receives raw exhaust 40 and outputs catalyzed exhaust 44 with reduced concentrations of hydrocarbons and carbon monoxide.

The DOC housing 26 then directs the catalyzed exhaust 44 to the mixer 30. In the mixer 30, the injector 32 sprays DEF 34 from the DEF tank 12 into the exhaust 44. The DEF 34 is a solution used to reduce NOx within the exhaust 44. For example, in certain embodiments, the DEF 34 may include an aqueous urea solution that undergoes thermal decomposition and hydrolysis within the exhaust system 24 to produce ammonia, which the SCR 38 uses to convert the NOx into nitrogen and water. Thus, the mixer 30 supplies a well-mixed exhaust solution 46 (e.g., a mixture of the exhaust 44 and DEF 34) to the SCR module 38. The SCR module 38 receives the exhaust solution 46 and uses the distributed DEF 34 to reduce the NOx concentration in the exhaust gas. Finally, the SCR module 38 sends processed exhaust 48 with a reduced NOx concentration through the exhaust pipe 18 to be released into the atmosphere.

Returning to FIG. 1, the exhaust system 24, and more specifically the DEF tank assembly 12, may also be contained within the vehicle body 14. In the depicted embodiment, portions of the body 14 that house the DEF tank assembly 12 have been removed to enable viewing of the assembly 12 within the context of the vehicle 10.

As depicted, the DEF tank assembly 12 includes a tank body 49 to store DEF, a hose 50 coupled to a first fill spout 52, and a second fill spout 54. In certain embodiments, portions of the DEF tank assembly 12 (e.g., the tank body 49, the first fill spout 52, and/or the second fill spout 54) may be formed of a polymeric material, such as thermoplastic or thermosetting plastic, via rotational molding. Although rotational molding is disclosed herein, other suitable molding techniques, such as injection molding, may be utilized in alternative embodiments.

More specifically, the second fill spout 54 enables the DEF tank 12 to be filled from a first side (e.g., right side) of the vehicle 10. In addition, the fuel tank 15 may be filled via the fuel fill spout 16. However, as depicted, the fuel fill spout is positioned on a second side (e.g., left side) of the vehicle 10. Accordingly, as described above, the hose 50 may be coupled to a second fill spout and routed through the vehicle body 14 to enable the DEF tank 12 to also be filled from the second side (e.g., left side). In other words, improving convenience, an operator may replenish both the DEF tank 12 and the fuel tank 15 from the same side of the vehicle, thereby reducing the duration associated with replenishing the DEF and fuel.

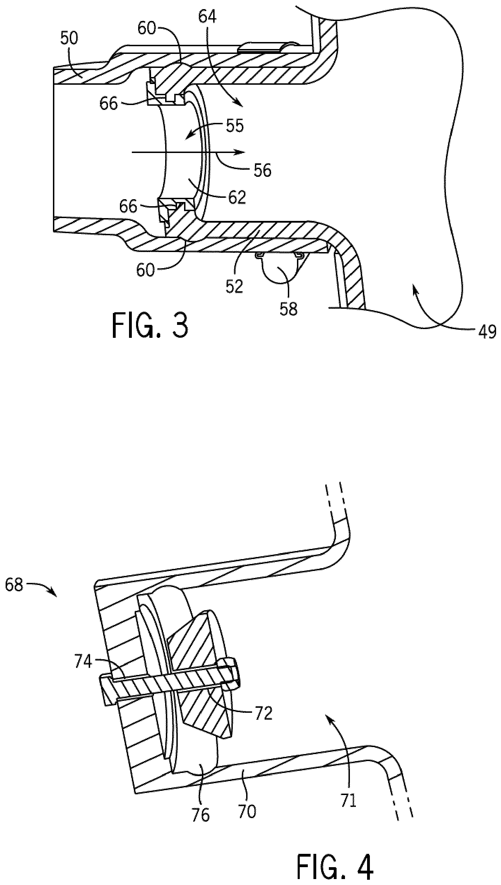

The first fill spout 52, which is not explicitly depicted in FIG. 1 because it is blocked from view by the body 49 of the DEF tank assembly 12, is clearly depicted in FIG. 3. As depicted in FIG. 3, an end of the hose 50 is disposed about the outer surface of the first fill spout 52 to enable the DEF tank assembly 12 to be filled as DEF flows from the hose 50 to the tank body 49 via the opening 55 of the first fill spout 52 (represented by arrow 56).

To reduce DEF leakage from the coupling between the hose 50 and the first fill spout 52, the hose 50 is secured to the outer surface of the first fill spout 52 by a hose clamp 58 and/or molded ridges 60 on the outer surface of the first fill spout 52. More specifically, the hose clamp 58 provides an inward force around the outer surface of the hose 50, and the molded ridges 60 provide frictional resistance against the inner surface of the hose 50, thereby blocking movement of the hose 50 relative to the first fill spout 52. Additionally, the molded ridges 60 engage the inner surface of the hose 52 to block fluid flow from the coupling.

Furthermore, a support ring 62 is bonded to the polymeric material 64 of the first fill spout 52 to provide structural support to the first fill spout 52. For example, because the support ring 62 is more rigid than the polymeric material 64, the support ring 62 may reduce deformation of the fill spout 52 under the pressure of the hose clamp 58, thereby establishing a tight seal between the outer surface of the first fill spout 52 and the inner surface of the hose 50. Furthermore, the support ring 62 may experience less variation in size (e.g., shrinkage) due to changes in the environment (e.g., cold temperatures), which may improve the reliability of the coupling between the hose 50 and the fill spout 52. In some embodiments, the support ring 62 may be formed from steel, other metallic materials, or the like. As depicted, the polymeric material 64 is molded to the contours 66 of the support ring 62. In some embodiments, the support ring 62 is bonded to the first fill spout 52 during the molding process (e.g., rotational molding) of the DEF tank 12.

In the depicted embodiments, the hose 50 is secured to the outer surface of the fill spout 52. Additionally or alternatively, the hose 50 may be secured within the inner diameter of the fill spout 52. That is, the inner surface of the fill spout 52 may be disposed about the outer surface of the hose 50.

One embodiment of a rotational mold 68 that may be used to form the first fill spout 52 is depicted in FIG. 4. As will be appreciated, the mold 68 may be part of a larger mold used to form the entire DEF tank 12 via rotational molding. As depicted, the mold 68 includes an outer shell 70, an inner cavity 71, and a plug 72 that extends through an opening 74 in the outer shell 70. As will be described in more detail below, the inner cavity 72 molds the outer surface of the fill spout 52. For example, the walls of the inner cavity 71 (e.g., inner surface of outer shell 70) include a recess 76 to form the molded ridges 60 on the outer surface of the fill spout 52. Additionally, as will be described in more detail below, the plug 72 holds the support ring 62 in place during molding and facilitates forming a well-defined opening 55 in the fill spout 52.

To form the first fill spout 52, the support ring 62 is secured within the cavity 71 by the plug 72 while liquid polymeric material 64 (e.g., thermoplastic resin or thermosetting resin) is flowed into the mold 68. In the depicted embodiment, the support ring 62 is secured between the plug 72 and the outer shell 70 such that the ring 62 may be molded to the distal end of the fill spout 52. In other embodiments, the support ring 62 may be secured to mold 68 at a different location, thereby molding the support ring 62 another portion of the tank 12, such as an intermediate portion of the fill spout 52 or the tank body 49.

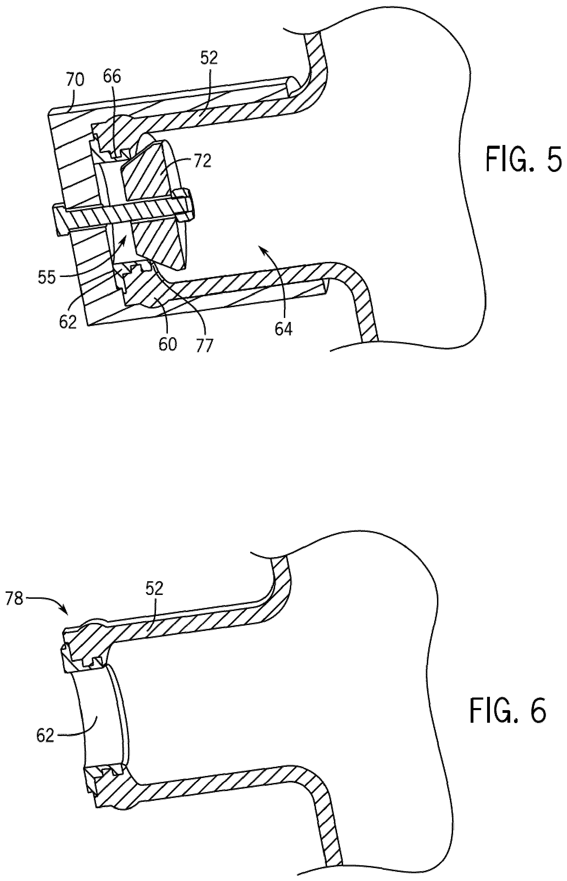

During the rotational molding process, the mold 68 is rotated (e.g., spun) to adhere the liquid polymeric material to the walls of the cavity 71, to the contours 66 of the support ring 62, and/or to the surface of the plug 72, as depicted in FIG 5. More specifically, the liquid polymeric material 64 that adheres to the walls of the cavity 71 (e.g., inner surface of the outer shell 70) forms the outer surface of the fill spout 52. For example, as depicted, the polymeric material 64 is molded to form the molded ridges 60. Additionally, the support ring 62 and the plug 72 are utilized to form the opening 55 of the first fill spout 52. More specifically, as the liquid polymeric material 64 flows within the mold 68, the plug 72 and the support ring 62 block the polymeric material 64 from flowing into the opening 55. Thus, the polymeric material 64 is directed to flow around the plug 72 and the support ring 62. For example, as depicted, the polymeric material 64 is guided into the contours 66 of the support ring 62 and along the edges 77 of the plug 72. Accordingly, the plug 72 and the support ring 62 may establish the inner surface of the fill spout 52 by defining the opening 55. As can be appreciated, with the opening 55 well-defined during the molding process and the support ring 62 in place to provide structural support for the fill spout 52, the mechanical cleaning (e.g., machining) of the inner surface of the fill spout 52 and inserting the hose 50 or support insert to provide support may be obviated.

After the polymeric material 64 flows into the rotational mold (e.g., covers the cavity 71, the support ring 62, and the plug 72), the polymeric material 64 hardens (e.g., via a cooling process) and the DEF tank 12 is removed from the mold 68, as depicted in FIG. 6. As described above, during the molding process, the polymeric material 64 fills the contours 66 of the support ring 62. Thus, when the polymeric material 64 hardens, the support ring 62 may be bonded (e.g., secured) to a distal end 78 of the fill spout 52. In other words, the contours 66 of the support ring 62 may provide an enhanced (e.g., stronger) bond between the polymeric material 64 and the support ring 62.

More specifically, the outer shell 70 may be removed from the DEF tank 12 and the plug 72 may be extracted from the DEF tank 12. In some embodiments, the plug 72 may be pulled through the opening 55. In the depicted embodiment, because the diameter of the plug 72 is larger than the diameter of the opening 55, the plug 72 may be formed from an elastic material, such as rubber, to enable the plug 72 to be removed from the tank 12 through the opening 55. In other embodiments, the plug 72 may be removed through another opening in the tank 12. Once the first fill spout 52 is formed, the hose 50 may be coupled to the fill spout 52, as shown in FIG. 3.

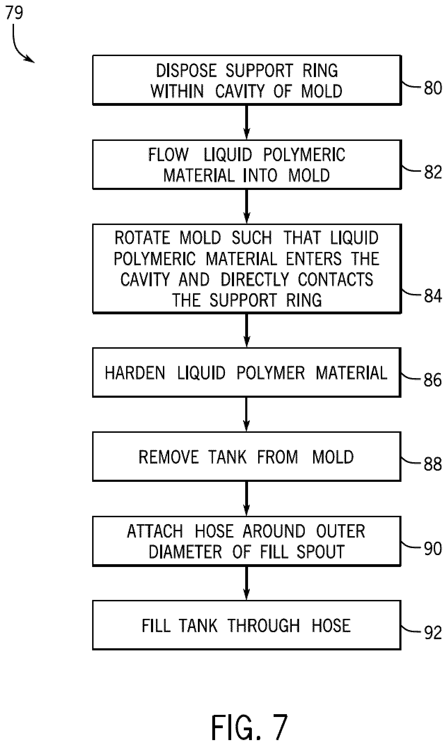

Based on the techniques described above, FIG. 7 shows one embodiment of a process 79 for forming the DEF tank assembly 12. The process 79 begins by disposing the support ring 62 within the cavity 71 of the mold (process block 80). In some embodiments, the support ring 62 may be secured in the cavity 71 between the outer shell 70 and the plug 72, such that the support ring 62 will be molded to the distal end 78 of the fill spout 52. Liquid polymeric material 64 is then be flowed into the mold 68 (process block 82) and the mold 68 is rotated (e.g., spun) such that the liquid polymeric material 64 enters the cavity 71 and directly contacts the support ring 62 (process block 84). As described above, the liquid polymeric material 64 covering the walls of the cavity 71 (e.g., the inner surface of the outer shell 70) forms the outer surface of the fill spout 52, and the liquid polymeric material 64 may fill the contours 66 of the support ring 62 to form the opening 55. Thus, when the polymeric material 64 hardens (process block 86), the support ring 62 is bonded (e.g., secured) to the polymeric material 64 of the fill spout 52. After the polymeric material 64 is hardened, the DEF tank 12 may be removed from the mold 68 (process block 88) and the hose 50 may be attached around the outer diameter of the fill spout 52 (process block 90). In some embodiments, the hose 50 may be secured to the fill spout 52 through a combination of the hose clamp 58 and the molded ridges 60. As described above, the support ring 62 may provide structural support for the fill spout 52, which may include reducing the likelihood of the fill spout 52 collapsing under the pressure of the hose clamp 58. With the hose 50 attached, the DEF tank 12 may be filled through the hose 50 (process block 92). As described above, since the opening 55 of the fill spout 52 is well-defined by the support ring 62, the amount of mechanical cleaning used to clear the fill spout 52 and the debris produced by the cleaning may be obviated.

The technical effects of the present disclosure include improving the reliability of the DEF tank 12. More specifically, the technical effects may include substantially reducing or eliminating fluid leakage through the coupling between the hose 50 and the fill spout 52 on the DEF tank 12. In some embodiments, such technical effects results from bonding a support ring 62 to the fill spout 52 during molding of the fill spout 52 to provide structural support for the fill spout 52. For example, the support ring 62 may substantially reduce or eliminate the possibility of the coupling between the fill spout 52 and the hose 50 loosening undesirably (e.g., during cold temperatures or under pressure from the hose clamp 58). Additionally, the reliability of the DEF tank 12 may be improved by substantially reducing or eliminating the mechanical cleaning process used to define the opening 55. Instead, the support ring 62 may be molded into the fill spout 52 to well-define the opening 55 and provide structural support for the fill spout 52.

## Claims

1. A method for manufacturing a fluid storage tank assembly (12) for an off-road vehicle (10), comprising:
- disposing a support ring (62) within a cavity (71) of a rotational mold (68), wherein the cavity (71) is shaped to form a fill spout (52, 54) of the fluid storage tank assembly (12);
- holding said support ring (62) in place using a plug (72) which extends through an opening (74) in the outer shell (70) of said mold (68) to form a well-defined opening (55) in said fill spout (52, 54); and
- flowing a liquid polymeric material (64) within the rotational mold (68) such that the liquid polymeric material (64) enters the cavity (71), directly contacts the support ring (62), and bonds to the support ring (62) as the liquid polymeric material
(64) hardens.

2. The method of claim 1, comprising attaching a hose (50) around an outer diameter of the fill spout (52, 54) to enable the fluid storage tank assembly (12) to be filled with a fluid.

3. The method of claim 1, wherein flowing the liquid polymeric material (64) within the rotational mold (68) comprises:
- flowing the liquid polymeric material into the rotational mold (68);
- rotating the rotational mold (68); and
- hardening the liquid polymeric material (64).

4. The method of claim 1, wherein flowing the liquid polymeric material (64) within the rotational mold (68) comprises filling contours of the support ring (62) with the liquid polymeric material (64).

5. The method of claim 1, wherein disposing the support ring (62) within the cavity (71) comprises positioning the support ring (62) at a distal end of the cavity (71) such that the support ring (62) is bonded to a distal end of the fill spout (52, 54) as the liquid polymeric material (64) hardens.

6. The method of claim 1, wherein flowing the liquid polymeric material (64) within the rotational mold (68) comprises forming ridges (60) on an outer surface of the fill spout (52, 54) to facilitate securing a hose (50) to the fill spout (52, 54).

## Patentansprüche

1. Ein Verfahren zur Herstellung einer Flüssigkeits-Speichertank-Anordnung (12) für ein Geländefahrzeug (10), mit den folgenden Schritten:
- Anordnen eines Tragringes (62) in einem Hohlraum (71) einer Rotationsform (68), wobei der Hohlraum (71) so geformt ist, dass er einen Einfüllstutzen (52, 54) der Flüssigkeits-Speichertank-Anordnung (12) bildet;
- Halten des Tragringes (62) an seinem Platz unter Verwendung eines Stopfens (72), der sich durch eine Öffnung (74) in dem Außenmantel (70) der Form (68) erstreckt, um eine gut definierte Öffnung (55) in dem Füllstutzen (52, 54) zu bilden; und
- Einleiten eines flüssigen Polymer-Materials (64) in die Rotationsform (68) derart, dass das flüssige Polymer-Material (64) in den Hohlraum (71) eintritt, direkt mit dem Tragring (62) in Kontakt kommt und sich an den Tragring (62) bindet, während das flüssige Polymer-Material (64) aushärtet.

2. Das Verfahren nach Anspruch 1, das die Befestigung eines Schlauches (50) um einen Außendurchmesser des Füllstutzens (52, 54) umfasst, um es der Flüssigkeits-Speichertank-Anordnung (12) zu ermöglichen, mit der Flüssigkeit gefüllt zu werden.

3. Das Verfahren nach Anspruch 1, bei dem das Einströmen des flüssigen Polymer-Materials (64) in das Innere der Rotationsform (68) Folgendes umfasst:
- Einströmen des flüssigen Polymer-Materials in die Rotationsform (68);
- Drehen der Rotationsform (68); und
- Aushärten des flüssigen Polymer-Materials (64).

4. Das Verfahren nach Anspruch 1, bei dem das Einströmen des flüssigen Polymer-Materials (64) in das Innere der Rotationsform (68) das Füllen von Konturen des Tragringes (62) mit dem flüssigen Polymer-Material (64) umfasst.

5. Das Verfahren nach Anspruch 1, bei dem das Anordnen des Tragringes (62) in dem Hohlraum (71) die Anordnung des Tragringes (62) an einem distalen Ende des Hohlraumes (71) derart umfasst, dass der Tragring (62) mit einem distalen Ende des Füllstutzens (52, 54) verbunden wird, wenn das flüssige Polymer-Material (64) aushärtet.

6. Das Verfahren nach Anspruch 1, bei dem das Einströmen des flüssigen Polymer-Materials (64) in das Innere der Rotationsform (68) die Bildung von Wülsten (60) auf einer Außenoberfläche des Füllstutzens (52, 54) umfasst, um die Befestigung eines Schlauches (50) an dem Füllstutzen (52, 54) zu ermöglichen.

## Revendications

1. Procédé de fabrication d'un ensemble de réservoir de stockage de fluide (12) pour un véhicule tout terrain (10), comprenant les opérations consistant à :
- disposer une bague de support (62) à l'intérieur d'une cavité (71) d'un moule rotatif (68), la cavité (71) étant façonnée pour former un bec de remplissage (52, 54) de l'ensemble de réservoir de stockage de fluide (12),
- maintenir ladite bague de support (62) en place en utilisant un bouchon (72) qui s'étend au travers d'une ouverture (74) dans la coque extérieure (70) du dit moule (68) pour former une ouverture bien définie (55) dans ledit bec de remplissage (52, 54), et
- écouler un matériau polymère liquide (64) à l'intérieur du moule rotatif (68) de sorte que le matériau polymère liquide (64) pénètre dans la cavité (71), entre directement en contact avec la bague de support (62), et adhère à la bague de support (62), lorsque le matériau polymère liquide (64) durcit.

2. Procédé selon la revendication 1, comprenant une opération consistant à fixer un tuyau flexible (50) autour d'un diamètre extérieur du bec de remplissage (52, 54) pour permettre à l'ensemble de réservoir de stockage de fluide (12) d'être rempli avec un fluide.

3. Procédé selon la revendication 1, selon lequel l'opération consistant à écouler le matériau polymère liquide (64) dans le moule rotatif (68) comprend les étapes consistant à :
- écouler le matériau polymère liquide dans le moule rotatif (68),
- faire tourner le moule rotatif (68), et
- durcir le matériau polymère liquide (64).

4. Procédé selon la revendication 1, selon lequel l'opération consistant à écouler le matériau polymère liquide (64) dans le moule rotatif (68) comprend une étape consistant à remplir les contours de la bague de support (62) avec le matériau polymère liquide (64).

5. Procédé selon la revendication 1, selon lequel l'opération consistant à disposer la bague de support (62) à l'intérieur de la cavité (71) comprend le positionnement de la bague de support (62) à une extrémité distale de la cavité (71) de telle sorte que la bague de support (62) adhère à une extrémité distale du bec de remplissage (52, 54) lorsque le matériau polymère liquide (64) durcit.

6. Procédé selon la revendication 1, selon lequel l'opération consistant à écouler le matériau polymère liquide (64) dans le moule rotatif (68) comprend une opération consistant à former des arêtes (60) sur une surface extérieure du bec de remplissage (52, 54) pour faciliter la fixation d'un tuyau flexible (50) au bec de remplissage (52, 54).
